# EUROPEAN PATENT APPLICATION

(11) **EP 4 679 744 A1**
(43) Date of publication of application: **14.01.2026**
(21) Application number: 24187391.8
(22) Date of filing: 09.07.2024
(51) Int. Cl.: H04L 1/00, H04B 17/373, H04W 72/542, G05B 19/418, H04W 24/02

(54) **METHOD FOR CONTROLLING A COMMUNICATION CHANNEL IN A WIRELESS NETWORK**

(71) Applicant: Siemens Aktiengesellschaft, 80333 München (DE)
(72) Inventor: Chorppath, Anil Kumar, 76437 Rastatt (DE); Datta, Rohit, 90402 Nuremberg (DE); Fiorentino, Vincenzo, 90491 Nürnberg (DE); Renukachari, Kavyashree, 76187 Karlsruhe (DE)
(74) Representative: Siemens Patent Attorneys

(57) **Abstract**

The invention relates to a method for computer-implemented optimized controlling of a communication channel (2) of a wireless communication system (1) in an industrial environment, the wireless communication system (1) comprising a sending communication device (10), a receiving communication device (20) and a wireless communication network (30) having at least one antenna (311, 312), a radio access network (320) configured to be controlled by a RAN intelligent controller, RIC, and a core network (330). The communication channel (2) is established between the sending communication device (10) and the receiving communication device (20) via the wireless communication network (30). The following steps are performed:
a) obtaining channel quality data (CQD) of the communication channel (2), the channel quality data (CQD) being current data obtained from the radio access network (320);
b) determining future channel quality data (FCQD) of the communication channel (2) by processing the obtained channel quality data (CQD) by a trained data driven model (MO), where the obtained channel quality data (CQD) are fed as digital input to the trained data driven model (MO) and the trained data driven model (MO) provides the future channel quality data (FCQD) as a digital output;
c) processing the future channel quality data (FCQD) in order to determine radio resource allocation parameters (RSAP); and
d) reconfigure the at least one antenna (311, 312) using the determined radio resource allocation parameters (RSAP).

## Description

*Independent of the grammatical term usage, individuals with male, female or other gender identities are included within the term.*

The present invention relates to a method and an apparatus for computer-implemented optimized controlling of a communication channel of a wireless communication system, e.g., in an industrial environment.

Industrial devices, such as mobile robots, moving in a production area and communicating with other industrial devices exchange data via a communication channel of a wireless communication system of an industrial environment need Ultra Reliable Low Latency Communication (URLLC). This is provided by so-called industrial wireless communication systems, such as a 5G private network or an industrial Wi-Fi installed in the production area, e.g. a factory hall. Due to the fact that the radio coverage may change depending on the location of the flexible production area it is quite challenging to maintain a quality-of-service (QoS) which is needed for providing reliable communication between the industrial devices. Therefore, in 5G networks a radio access network, RAN, scheduler is made aware of application traffic.

Even if the communication reliability suffers from individual packet losses, it is a goal to improve an application availability. In industrial wireless communication networks, an application refers to a controller (sender) and an actuator (receiver), where the controller periodically transmits control data to the actuator via a communication channel of the communication network. This communication is based on packets (also referred to as frames) which are transmitted with a given cycle time, such as every 5 milliseconds. However, packet losses can be distributed at several time instances. In order to be aware of packet losses, a survival time of the application is defined. In known industrial communication networks, such as ProfiNet or OPC UA, a survival time of 3 cycle times is defined. This means that the communication system should minimize the probability of 3 consecutive packets being dropped. Otherwise, the industrial device being the receiver of the communication will be controlled into a safety mode. Survival time may be defined as in 3GPP TS 22.261 (Service requirements for the 5G system), and/or may be synonymous with the time period an application can survive without any burst. The survival time refers to the time that an application consuming a communication service may continue without an anticipated message. Maximum number of messages (message is equivalent to a burst) or in terms of time units. Single burst is expected within a single time period referred to as the periodicity. The maximum survival time indicates the time period the communication service may not meet the application's requirement before the communication service is deemed to be in an unavailable state. The survival time indicates to the communication service the time available to recover from failure. The relation between logical communication link, communication service and application statuses (example with lost messages) is shown, e.g., in Figure C.3-1 of ETSI TS 122 104 V16.5.0 (2020-09). The logical communication link is up and running (blue line is UP). A source device starts sending periodic messages to a target device (orange arrows), on which an automation function (application) is running. The communication service is, from the point of view of the target application, in an up state (violet line is UP) and so is the application (green line is UP). The logical communication link status changes to down state if it no longer can support end-to-end transmission of the source device's messages to the target device in agreement with the negotiated communication requirements. Once the application on the target device senses the absence (or unsuccessful reception) of expected messages ("Deadline for expected message" in Figure C.3-1), it will wait a pre-set period before it considers the communication service to be unavailable ; this is the so-called survival time. The survival time can be expressed as - a period or, - especially with cyclic traffic, as maximum number of consecutive incorrectly received or lost messages. If the survival time has been exceeded, both the communication service and the application transition into a down state (violet and green lines change to DOWN in Figure C.3-1). The application will usually take corresponding actions for handling such situations of unavailable communication services. For instance, it will commence an emergency shutdown. Note that this does not imply that the target application is "shut off'; rather it transitions into a pre-defined state, e.g. a safe state. In the safe state, the target application might still listen to incoming packets or may try to send messages to the source application, d) Once the logical communication link status is in the up state again (blue line in Figure C.3-1 changes to UP), the communication service state as perceived by the target application will change to the up state. The communication service is thus again perceived as available (violet line changes to UP in Figure C.3-1). The state of the application, however, depends on the counter measures taken by the application. The application might stay in down state if it is in a safe state due to an emergency shutdown. Or, the application may do a recovery and change to up state again. The time needed for the application to return to the up state after the communication service is restored is shown as "Application recovery time" in Figure C.3-1. Messages may be corrupted due to errors within an application, due to errors on the transmission medium, or due to message interference. In order for the automation application system to operate, messages need to be exchanged between spatially distributed application functions. For that process, messages are exchanged at an interface between the automation application system and the communication system. The messages to be transmitted for the intended function of a logical link are defined by strings of characters with a certain semantic. Such a character string is handed over as user data at the reference interface for transmission. If the number of characters in a message is too great for it to be transmitted as a unit, the message is divided for transmission into several packets (fragmentation). A message may thus comprise several packets.

For example, during each communication cycle, an application, such as comprised in a motion controller, sends updated set points to all actuators, and all sensors send their actual (current) values back to the motion controller. At present, motion control systems typically employ wired Industrial Ethernet technologies. Examples of these technologies include PROFINET IRT or EtherCAT - which support cycle times of less than 50 ps.

The above-mentioned radio access scheduler may be controlled by a radio access network, RAN, intelligent controller, RIC, which is a software-defined component of the Open Radio Access Network (Open RAN) architecture which is responsible for controlling and optimizing RAN functions. The RIC is a critical piece of the Open RAN disaggregation strategy, bringing multivendor interoperability, intelligence, agility, and programmability to RANs.

The RIC enables onboarding of third-party applications that automate and optimize RAN operations at scale while supporting innovative use cases that lower mobile operators' total cost of ownership and enhance customers quality of experience.

The RIC is divided into non-real-time (non-RT RIC) and near-real-time (near-RT RIC) components. The non-RT RIC is an element of the operator's centralized service management and orchestration framework.

Using specialized applications called rApps, the non-RT RIC enables control of RAN elements and their resources that take more than 1 second to complete. It also uses network data, performance metrics, and subscriber data to provide Al-based recommendations for network optimization and policy guidance to xApps running on the near-RT RIC, which in turn provides policy feedback to the non-RT RIC. The near-RT RIC resides within an edge computing device of the communication system or regional cloud and typically enables network optimization actions that take between 10 milliseconds to one second to complete.

Thus, RIC provides the possibility to control and optimize the performance of RANs through a closed loop operation. Additionally, it opens the door for applications by way of xApps which can subscribe to and act on the fine granular data collected over the RIC interfaces. Near-RT RIC controls and optimize Distributed Unit (DU) and Central Unit (CU) operation through fine-grained data collection and actions over the so called E2 interface enabling communication between the DU and the near-RT RIC. A description of RIC and its interfaces is disclosed in US 2021/0337420 A1.

However, there is still room for improvement of the communication of communication devices in industrial wireless communication systems with respect to Ultra Reliable Low Latency Communication (URLLC).

It is an object of the present invention to provide a method and an apparatus enabling optimized controlling of a communication channel of a wireless communication system in an industrial environment. It is a further object of the present invention to provide a computer program and computer program product adapted to carry out the method according to the invention.

These objects are solved by the independent patent claims. Preferred embodiments of the invention are defined in the dependent claims.

The invention provides a method for computer-implemented optimized controlling of a communication channel of a wireless communication system in an industrial environment. For example, the wireless communication system may be a 5G private network or an industrial Wi-Fi network. The wireless communication system comprises a sending communication device (sending unit) having a controller and a transceiver. The wireless communication system further comprises a receiving communication device (receiving unit) having an actuator and a transceiver. The sending communication device and the receiving communication device are to be understood as industrial devices used in a production environment. For example, the sending communication device may be a control unit, while the receiving communication device may be an actuator of a work machine, and/or vice versa. The wireless communication network comprises at least one antenna, a radio access network, RAN, configured to be controlled by a RAN intelligent controller, RIC, and a core network. The communication channel is established between the sending communication device and the receiving communication device via the wireless communication network. At least a communication path between the transceiver of the sending communication device and the antennas of the wireless communication network is wireless.

According to the method of the invention, the following steps may be performed at each time point of one or more time points during the operation of the wireless communication system.

In step a), channel quality data of the communication channel are obtained. In the following, the term "channel quality data" refers to digital data. The term "obtaining channel quality data" means that the data are received by a process implementing the method of the invention. The channel quality data are data being obtained from the radio access network. The data may be retrieved from a memory or received in real-time. The data may be received in response to transmitting a request message. Alternatively, the data may be received without having transmitted a request message.

In step b), future channel quality data of the communication channel are determined by processing the obtained channel quality data by a trained data driven model, where the obtained channel quality data are fed as digital input to the trained data driven model and the data driven model provides the future channel quality data as a digital output. The future channel quality data is a prediction of parameters characterizing the communication channel between the sending communication device and the receiving communication device.

In step c), the communication channel is controlled based on the future channel quality data. Such channel or transmission control may comprise link adaptation, e.g. by changing the MCS, and/or by using redundancy, e.g., by duplicate packet transmission and/or additional transmission or other radio resources, for the transmission of one or more radio data packets.

Furthermore, the future channel quality data may be processed in order to determine radio resource allocation parameters. They may be used to reconfigure the at least one antenna.

The method proposed provides an easy and straightforward method for optimized controlling of the communication channel of a wireless communication system in an industrial environment. The method is based on observing channel quality data in order to determine future channel quality data. To do so, a trained data driven model is used. This model is trained by training data comprising a plurality of channel quality data and future channel quality data. The prediction of channel quality may be based on, for example, from the following references: Varshney R. et al. "Deep Learning based Wirelss Channel Prediction: 5G Scenario", Procedia Computer Science, Vol. 218, pp. 2626-2635 (https://www.sciencedirect.com/science/article/pii/S1877050923002363) or Jiang W., Schotten Hans Dieter "Deep Learning for Fading Channel Prediction", IEEE Open Journal of the Communications Society, 23 March 2020, pp. 320-332 (https://ieeexplore.ieee.org/stamp/stamp.jsp?tp=&arnumber=9044427).

Any known data driven model being learned by machine learning may be used.. In a particularly preferred embodiment, the trained data driven model is a neural network, preferably a Long Short-Term Memory (LSTM)-based recurrent deep learning or recurrent neural networks (RNNs)Nevertheless, other trained data driven models may also be implemented, e.g. models based on deep learning models.

In a preferred embodiment of the invention, the channel quality data comprise channel quality and/or signal strength and/or a burst error parameters of a packet communication. The channel quality may be represented by, for example, an RSSI signal information received from the radio access network or channel state information (CSI).

In a further preferred embodiment of the invention, the radio resource allocation parameters comprise turning on a redundancy channel for the transmission of data packets. The redundancy channel may comprise a dual connectivity or PDPC duplication. The redundancy actuation may be done based upon receiving of an acknowledgment (ACK) frame of a packet drop. It has to be considered that turning on the redundancy channel needs some processing time. For periodic cyclic industrial traffic, it might not be beneficial to activate HARQ but instead to improve the application availability by focusing on the next packets or frames.

According to a further preferred embodiment, turning on the redundancy channel is performed by an application availability application or Central unit, CU, of the radio access network, RAN. In dual connectivity scenarios, multiple distributed units, DU, and RANs can be controlled by a RIC application availability application (xApp).

In a further preferred embodiment, step a) further comprises obtaining location data of the sending communication device, the location data being current location data obtained from the radio access network, wherein the location data are fed as a further digital input to the trained data driven model. According to this embodiment, location data may be used for RAN scheduling and optimization coupled with the industrial use-case. The location data may be collected by the RAN, in particular its localization application which is an software application, in particular an xApp in the near-RT RIC.

In particular, the future channel quality data comprises a prediction of burst errors, where the burst error is indicative of a consecutive number of topped frames transmitted by the sending communication device. More specifically, the trained data driven model correlates the location data with the burst error in order to provide the future channel quality data comprising the burst error as the digital output. The correlation may be performed by a vector extrapolation method based on the exact location of the sending communication device. The continuous locating data gathering is correlated with the burst error calculations done in the application availability xApp. Hence, the location of the sending communication device helps to predict the burst error.

According to a further preferred embodiment, determining the radio resource allocation parameters comprises determining PHY parameters, in particular MCS (Modulation and Coding Scheme). MCS determines the data rate transmitted in a wireless link.

According to a further preferred embodiment, the reconfiguration of the at least one antenna is performed predictive, thereby using the determined a radio resource allocation parameters, in particular error burst.

Besides the above method, the invention relates to an apparatus for computer-implemented optimized controlling of a communication channel of a wireless communication system in an industrial environment, where the apparatus is configured to perform the method or one or more preferred embodiments of the method.

Moreover, a computer program product with a program code is proposed, which is stored on a non-transitory machine-readable carrier, for carrying out the method according to the invention or one or more preferred embodiments thereof when the program code is executed on a computer.

Furthermore, a computer program with a program code for carrying out the method or one or more preferred embodiments thereof is proposed, when the program code is executed on a computer.

Further embodiments will now be described in detail and with respect to the accompanying figures.
- Fig. 1: shows a schematic illustration of a wireless communication system in an industrial environment;
- Fig. 2: shows a diagram illustrating the basic method steps according to a first embodiment of the invention; and
- Fig. 3: shows a diagram illustrating the basic method steps according to a second embodiment of the invention.

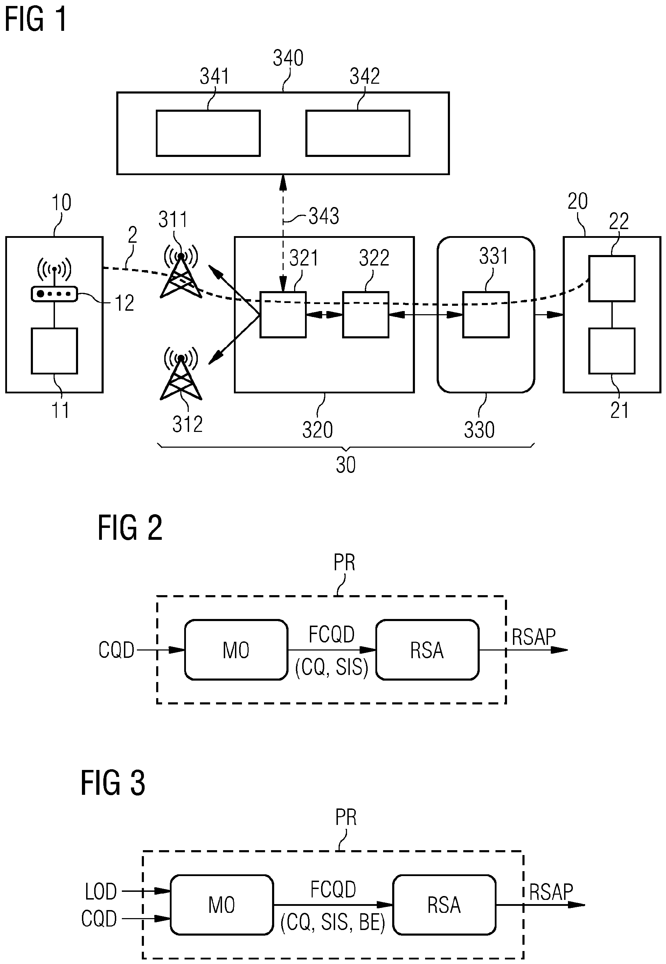

Fig. 1 illustrates a wireless communication system 1 in an industrial environment, such as a production environment in a factory hall with changing radio characteristics. The communication system 1 comprises a sending communication device 10, a receiving communication device 20 and a wireless communication network 30. It is to be understood, that the number of sending communication devices 10 and the number of receiving communication device is 20 is arbitrary. Hence, the number of sending communication devices 10 could be greater than 1. Also, the number of receiving communication devices 20 could be greater than 1. Both, the sending communication device 10 and the receiving communication device 20 may represent industrial devices. The wireless communication network 30 may be a private network, such as a 5G private network or a private Wi-Fi network.

The sending communication device 10 comprises a controller 11 and a transceiver 12. The controller 11 may be adapted to receive and process information, such as sensor information, in order to generate control commands. The control commands will be sent via the transceiver 12 and a communication channel 2 of the wireless communication network 30 to the receiving communication device 20.

The receiving communication device 20 comprises an actuator 21 and a transceiver 22. The control commands are received by the receiver 22 of the receiving communication device 20. Although not explicitly shown, the communication device 20 may also have a controller or processing unit in order to process the received control commands. The control commands are used to actuate the actuator 22, such as a valve, a motor, and so on.

The functionality of the sending communication device 10, the receiving communication device 20 and the wireless communication network 30 corresponds to a conventional wired industrial network, such as ProfiNet or OPC UA.

The wireless communication network 30 may be based on the Open Radio Access Network standard (Open RAN) architecture that is responsible for controlling and optimizing RAN functions.

The wireless communication network 30 comprises, by way of example only, two antennas 311, 312. The number of antennas could be much greater than two. Furthermore, the wireless communication network 30 comprises a radio access network, RAN, 320 configured to be controlled by a RAN intelligent controller, RIC, as well as a core network 330.

The RAN 320 comprises a scheduler 321 (also known as Distributed Unit, DU) and a processing unit (also known as Central Unit, CU). The core network 330, for example a 5G core, comprises a user plane function, UPF, 331 to which the receiving communication device 20 is connected. As known to those skilled in the art, the scheduler 321 and the Central unit 322 are software components where the Central Unit 322 is responsible for resource management and where the Distributed Unit 321 is responsible for scheduling connections between the sending communication device 10 and one of the antennas 311, 312 of the wireless communication network 30.

The scheduler 321 is controlled by the RIC 340 which is a software-defined component being responsible for controlling and optimizing RAN functions of the scheduler 321. The RIC 340 allows onboarding of third-party applications in order to automate and optimize RAN operations via an interface 343 (also known as E2-DU). The RIC 340 constitutes a near-RT RIC. The RIC 340 may be executed on the same processing unit of the RAN 320. Alternatively, the RIC 340 may be executed on an edge computer or in the cloud.

In the present example, two software-defined components 341 and 342 are installed on the RIC 340. The component 341 corresponds to a so-called localization application and the component 342 corresponds to an application availability application. Both components 341 and 342 represent so-called xApps, which in principle are known to those skilled in the art and will be used to optimize and control the scheduler 321 to provide Ultra Reliable Low Latency Communication to the communication devices. In particular, controlling the scheduler 321 in a manner described below allows to maintain a necessary quality of service (QoS) of the communication channel to even in a flexible production area where the radio coverage of the antennas 311 and 312 is changing.

The communication channel 2 is established between the sending communication device 10 and the receiving communication device 20 via the wireless communication network 30, wherein the transceiver 12 of the sending communication device 10 is communicatively connected to one of the antennas 311 or 312. In the present example of Fig. 1, the communication channel 2 is established between the transceiver 12, the antenna 311, the RAN 320 and the core network 330 which is connected by wire with the receiving communication device 20 and its transceiver 22, respectively.

In an industrial environment the communication between the sending communication device 10 and the receiving communication device 20 may be based on cyclic transmitting of data packets or frames, i.e. the sending communication device 10 transmits data packets with a given or predetermined cycle time, such as every 5 ms. Packet losses can be distributed at several time instances. To be aware of packet losses, a survival time of an application is defined. In industrial wireless communication networks, the term "application" refers to a controller (sending communication device 10) and an actuator (receiving communication device 20), where the controller periodically transmits control data to the actuator via the communication channel 2 of the communication network 30. In known industrial communication networks, such as ProfiNet or OPC UA, a survival time of 3 cycle times is defined. This means that the communication system 1 should minimize the probability of three consecutive data packets being dropped. Otherwise, the receiving communication device 20 will be controlled into a safety mode.

The method as described in the following provides an easy method to control the communication channel 2 of the wireless communication system 1 in an optimized manner.

According to a first embodiment shown in Fig. 2, channel or quality data CQD of the communication channel 2 are obtained. The channel quality data CQD are obtained by the RIC 340, in particular the application availability application 342, from the RAN 320. The channel quality data CQD may be retrieved from a memory of the RAN 320. Alternatively, the channel quality data CQD may be provided from the RAN 320.

The channel quality data CQD comprise a channel quality CQ and/or a signal strength SIS and/or other parameters, such as burst error BE parameters and/or a predetermined survival time of a packet communication between the sending communication device 10 and the receiving communication device 20.

The channel quality data CQD are transferred by a suitable communication link to a controlling unit comprising a processor PR implementing a trained data driven model MO. The processor PR receives the channel quality data CQD as a digital input and provides future channel quality data FCQD as a digital output.

The data driven model MO may be implemented in the RIC 340. The future channel quality data FCQD will then be used to determine radio resource allocation parameters RSAP, where the radio resource allocation parameters RSAP are obtained by processing the future channel quality data FCQD. Processing the future channel quality data FCQD in order to determine radio resource allocation parameters RSAP may be done by the application availability application 342 which constitutes a radio resource allocation unit RSA. The application availability application 342 transmits the radio resource allocation parameters RSAP via the interface 343 to the scheduler 321 of the RAN 320. The radio resource allocation parameters RSAP will be used by the scheduler 321 to reconfigure the antenna system (comprising all antennas 311, 312 of the wireless communication system 30). For example, the radio resource allocation parameters RSAP comprise an information which trigger the scheduler 321 to turn on a redundancy channel for the transmission of the data packets.

In the example of Fig. 1, the reconfiguration of the antenna system could be such that the antenna 312 would be used for communication with the sending communication device 10 instead of antenna 311. The redundancy channel may comprise dual connectivity or PDPC duplication. In dual connectivity scenarios, multiple distributed units and RANs can be controlled by the application availability application 342. The redundancy actuation may be done based upon receiving an acknowledgment ACK frame of a packet drop.

Consider that the survival time of an application is 3 cycle times, and a packet is transmitted every cycle time. This means that for 3 consecutive packet losses, the application (i.e. the functionality of the receiving communication device) becomes unavailable. Once the RAN 320 knows the first two packets are dropped, the RAN 320 enters survival time state (in order to bring the receiving communication device 20 in a safe state). The application availability application 342 helps with inference for the RAN 322 take necessary actions like turn on the redundancy for the transmission packet or change to better PHY parameters, such as MCS. An exemplary application, such as an (industrial) automation application, may perform and/or rely on periodic communication. That is, one or more messages must be sent within a given transfer interval. A message may thus be received correctly or incorrectly or even lost. For example, a survival time may thus be a multiple of or may comprise a multiple of times the transfer interval (coupled to the transmission of the message/packet) or cycle times (coupled to the application). This means if one or more messages in sequence are incorrectly received or lost, e.g., within the network, and the following message is correct, the communication service is still considered available. If one or more messages, e.g., three message, in a sequence are incorrect or lost before receipt of the next correct message, the communication service may be considered unavailable. Thus, in order to improve the availability of the application the communication channel may be controlled based on a number of messages, or packets, or frames that are incorrect or lost -as the case may. Hence, necessary actions like turning on the redundancy for the packet transmission or changing to better PHY parameters, such as a lower MCS may be taken. By using a redundant transmission and/or reducing the MCS the probability of the application receiving the message, packet or frame -as the case may be- may be increased. Thus, a shutdown or safe state of the application may be avoided. Hence, an application, e.g., monitoring the transmission and/or reception, such as the availability application 342, may cause necessary action(s) like turning on a redundancy, such as dual connectivity, or PDCP duplication, for the transmission of the packet and/or may change to better PHY parameters, such as a better MCS, for the (re-)transmission of the packet if a number of messages are lost or incorrectly received. The communication controller may ensure that the survival time of the application is met. After the first message is lost the MCS may be reduced. Also, the burst error prediction as described herein may be used to take proactive and/or predictive action. For example, if the first packet is lost less resource consuming channel or transmission adaptation may be carried out, i.e. MCS reduction. If a second packet, i.e. a retransmission of the first packet, is lost or incorrectly received more resource consuming channel or transmission adaptation may be carried out. In that case for example redundancy may be turned on.

Hence, in an embodiment a method of controlling a communication channel of a wireless communication system in an industrial environment is proposed, comprising adapting a (retransmission of a packet in case a first transmission of the packet is lost or incorrectly received in order to comply with the survival time of an application at a receiver side, e.g., by increasing the probability of receiving the packet, e.g., by an adaptation of an MCS used for the (retransmission and/or by turning on redundancy for the (re-)transmission.

According to a second embodiment shown in Fig. 3, besides the channel quality data CQD being obtained by the RIC 340 location data LOD are obtained. The location data are location data of the present current location of the sending communication device 10 within the industrial environment. The location data LOD are obtained from the RAN 320. The location data LOD are fed as further digital input to the trained data driven model MO. The channel quality data CQD and the location data LOD are transferred by a suitable communication link to the controlling unit comprising the processor PR implementing the trained data driven model MO. The processor PR receives the channel quality data CQD and the location data LOD as the digital input and provides future channel quality data FCQD as a digital output.

The future channel quality data FCQD consists of information about the burst error BE besides channel quality CQ and/or signal information strength SIS. As in the first embodiment, the future channel quality data will be processed by a radio resource allocation unit RSA in order to provide radio resource allocation parameters RSAP. The radio resource allocation unit RSA may be implemented by the application availability application 342. The burst error BE is indicative of a consecutive number of dropped frames transmitted by the sending communication device 10. The trained data driven model MO correlates the location data LOD with the burst error BE in order to provide the future channel quality data FCQD comprising the burst error BE as the digital output. The correlation may be performed by a vector extrapolation method based on the exact location of the sending communication device 10. The determined radio resource allocation parameters RSAP comprise PHY parameters, in particular MCS. However, they may comprise further communication channel parameters as well.

According to this second embodiment the location data LOD of the sending communication device 10 is collected by the localization application 341. The continuous locating of data points is correlated with burst error calculations. This is done by the application availability application 342 based on the exact location of the sending communication device 10. Hence, the location of the sending communication device 10 helps to predict the burst error scenario.

Including location data into the trained data driven model MO enables predictive reconfiguration of the antenna system using the determined radio resource allocation parameters RSAP.

The wireless communication channel 2 typically changes slowly. This results in burst packet errors. So, it is necessary to take some action to increase the application availability which suffers from such burst errors. The method to increase the application availability (i.e. the functionality of the receiving communication device) includes obtaining the burst scenario of consecutive packets and changing PHY parameters and /or redundancy channels to enhance the reliability of critical data packets. Working on application reliability/availability has higher potential in industrial scenarios in comparison to the traditional means to reduce individual packet error rate (PER).

The actual execution of the solution can be limited to the RAN itself if there are real time limitations. The RIC application availability application 342 can be used to supply channel and traffic aware inference and data training. Machine learning based inference from the data in the RISC 340 can be used for predictive optimization of application availability by observing the wireless communication channel 2. That machine-based learning from the channel quality CQ and PHY parameters can be used to predict next burstiness of the communication channel 2 and could be used to activate redundancy mechanisms in the appropriate time slot.

Redundancy activation can be done based on the acknowledgment of a packet drop. However, it needs to be considered that it will have some processing time.

The method as described above helps to achieve not only reliable communication in 5G wireless networks, but also optimized industrial application availability. This also means that the QoS guarantee of URLLC communication is also ensured during handover.

The method takes into consideration mobility of sending communication devices for RAN operations, such as handover and dual connectivity.

Industrial consumer use cases with mobile devices are better served and higher availability of the application can be assured. This will result in better customer satisfaction and competitive advantage compared to other industrial 5G solution providers.

## Claims

1. A method of controlling a communication channel (2) of a wireless communication system (1) in an industrial environment,
comprisinga) obtaining channel quality data (CQD) of the communication channel (2),
b) determining future channel quality data (FCQD) of the communication channel (2) by processing the obtained channel quality data (CQD) by a trained data driven model (MO), where the obtained channel quality data (CQD) are fed as digital input to the trained data driven model (MO) and the trained data driven model (MO) provides the future channel quality data (FCQD) as a digital output;
c) controlling the communication channel, link adaptation or redundancy, based on the future channel quality data.

2. The method according to claim 1 comprising the step of:
processing the future channel quality data (FCQD) in order to determine radio resource allocation parameters (RSAP); and
reconfiguring at least one antenna (311, 312) using the determined radio resource allocation parameters (RSAP).

3. The method according to claim 1 or 2, **characterized in that** the channel quality data (CQD) comprise channel quality (CQ) and/or signal strength (SIS) and/or a burst error parameter (BE) of a packet communication.

4. The method according to claim 1, 2 or 3, **characterized in that** the radio resource allocation parameters (RSAP) comprise turning on a redundancy channel for the transmission of data packets.

5. The method according to claim 4, **characterized in that** turning on the redundancy channel is performed by an application availability application (342) or a central unit, CU, (322) of the radio access network (320).

6. The method according to one of the preceding claims, **characterized in that**
step a) further comprises obtaining location data (LOD) of the sending communication device (10), the location data (LOD) being current location data obtained from the radio access network (320);
wherein the location data (LOD) are fed as further digital input to the trained data driven model (MO).

7. The method according to claim 6, **characterized in that** the future channel quality data (FCQD) comprises a prediction of burst error (BE), where the burst error (BE) is indicative of a consecutive number of dropped frames transmitted by the sending communication device (10).

8. The method according to claims 6 or 7, **characterized in that** the trained data driven model (MO) correlates the location data (LOD) with the burst error (BE) in order to provide the future channel quality data (FCQD) comprising the burst error (BE) as the digital output.

9. The method according to one of the preceding claims, **characterized in that** the determined radio resource allocation parameters (RSAP) comprise PHY parameters, in particular MCS.

10. The method according to one of the preceding claims 6 to 8, each in combination with claim 8, **characterized in that** the reconfiguration of the at least one antenna (311, 312) using the determined radio resource allocation parameters (RSAP) is performed predictive.

11. An apparatus for controlling a communication channel (2) of a wireless communication system (1), e.g., in an industrial environment, wherein the apparatus comprises a processor (PR) configured to the following steps:
a) obtaining channel quality data (CQD) of the communication channel (2),
b) determining future channel quality data (FCQD) of the communication channel (2) by processing the obtained channel quality data (CQD) by a trained data driven model (MO), where the obtained channel quality data (CQD) are fed as digital input to the trained data driven model (MO) and the trained data driven model (MO) provides the future channel quality data (FCQD) as a digital output;
c) controlling the communication channel based on the future channel quality data.

12. The apparatus according to claim 11, the apparatus configured to perform the steps of
processing the future channel quality data (FCQD) in order to determine radio resource allocation parameters (RSAP); and
reconfiguring at least one antenna (311, 312) using the determined radio resource allocation parameters (RSAP).

13. The apparatus according to claim 11, wherein the apparatus is configured to perform the method according to one off claims 2 to 10.

14. A computer program product with program code, which is stored on a non-transitory machine-readable carrier, for carrying out a method according to one of claims 1 to 10 when the program code is executed on a computer.

15. A computer program with program code for carrying out a method according to one of claims 1 to 10 when the program code is executed on a computer.
